# EUROPÄISCHE PATENTSCHRIFT

(11) **EP 1 552 673 B1**
(45) Veröffentlichungstag und Bekanntmachung des Hinweises auf die Patenterteilung: **06.09.2017**
(21) Anmeldenummer: 03807732.7
(22) Anmeldetag: 17.07.2003
(51) Int. Cl.: G04G 5/00, H04M 3/24, H04M 15/00, H04M 3/22, G06F 1/14, H04M 3/36

(54) **SYSTEM UND VERFAHREN ZUM ÜBERPRÜFEN DER VON EINEM NETZKNOTEN ERFASSTEN VERBINDUNGSBEZOGENEN DATEN**
SYSTEM AND METHOD FOR MONITORING TIME-RELATED CONNECTION DATA DETECTED BY A NETWORK NODE
SYSTEME ET PROCEDE DE CONTROLE DES DONNEES DE CONNEXION EN FONCTION DU TEMPS, DETECTEES PAR UN NOEUD RESEAU

(30) Priorität: 08.10.2002 DE 10246883
(43) Veröffentlichungstag der Anmeldung: 13.07.2005
(73) Patentinhaber: Deutsche Telekom AG, 53113 Bonn (DE)
(72) Erfinder: SCHMIDT, Monika, 90402 Nürnberg (DE); SCHNEIDER, Ernst, 90579 Langenzenn (DE)
(74) Vertreter: Blumbach Zinngrebe
(86) Internationale Anmeldenummer: PCT/DE2003/002393
(87) Internationale Veröffentlichungsnummer: WO 2004/034688

(56) Entgegenhaltungen:
- DE-A- 4 213 883
- DE-A- 19 912 414
- US-A- 5 729 588
- B. STÜHN: "Einführung in die Physik I; WS2001/2002; Stichwortsammlung" SKRIPT: EINFÜHRUNG IN DIE PHYSIK I, [Online] - 2001 Seiten 1-8, XP002257410 TU Ilmenau Gefunden im Internet: <URL:http://www.physik.tu-ilmenau.de/techn 2/PhysikIscript.pdf> [gefunden am 2003-10-10]

## Beschreibung

Die Erfindung betrifft ein System und ein Verfahren zum Überprüfen der von einem Netzknoten, insbesondere von einem vermittelnden Netzknoten eines Telekommunikationsnetzes erfassten verbindungsbezogenen Kommunikationsdaten, die zur Entgeltabrechnung verwendet werden.

Ein wesentliches Leistungsmerkmal von Vermittlungsstellen in einem Telekommunikationsnetz besteht darin, die während einer Verbindung sowie bei Nutzung einer Dienstleistung anfallenden Entgeltdaten zu erfassen. Zu diesem Zweck müssen für jede Kommunikationsverbindung in der Vermittlungsstelle alle für die Entgeltberechnung notwendigen Kommunikationsdaten erfasst werden. Um die Richtigkeit der Kommunikationsdatenerfassung überprüfen zu können, ist es erforderlich geeignete Testsysteme bereitzustellen.

Ein solches Testsystem ist beispielsweise aus der DE 199 12 414 A1 bekannt, welches den Oberbegriff der unabhängigen Ansprüche 1 und 6 bildet. Allerdings leidet dieses Testsystem daran, dass zeitrelevante Ereignisse, wie zum Beispiel Verbindungsbeginn und Verbindungsende nur ungenau erfasst werden können. Demzufolge ist dieses Verfahren nicht geeignet, um zu überprüfen, ob bei der Erfassung von Entgeltdaten vorgegebene enge Toleranzgrenzen eingehalten werden.

Aus dem Skript XP 002257410 Einführung in die Physik I (0000), 1 bis 8 werden unter anderem Messfehler erörtert. Jedes Messergebnis ist durch zufällige und systematische Fehler beeinträchtigt, wobei systematische Fehler durch das Ableseverhalten und die Eichgenauigkeit eines Messgerätes festgelegt sind.

Der vorliegenden Erfindung liegt nunmehr die Aufgabe zugrunde, ein System und ein Verfahren verfügbar zu machen, mit denen die von einem Netzknoten erstellten Kommunikationsdatensätze auch dann auf ihre Korrektheit hin geprüft werden können, wenn die Erfassungungsgenauigkeit zeitrelevanter Ereignisse relativ zu einer Normalzeit engere Toleranzgrenzen einhalten muss.

Der Kerngedanke der Erfindung ist darin zu sehen, die im Testsystem erfassten zeitrelevanten Daten für eine Kommunikationsverbindung präziser angeben zu können. Die Messgenauigkeit wird unter anderem dadurch verbessert, dass die Messpunkte zum Erfassen von zur Entgeltberechnung erforderlichen Ereignissen so ausgewählt werden, dass der systematische Messfehler minimiert wird, und dass dieser Messfehler zur Korrektur der im Testsystem ermittelten zeitrelevanten Daten berücksichtigt wird.

Das technische Problem löst die Erfindung zum einen mit den Verfahrensschritten des Anspruchs 1, zum anderen mit den Vorrichtungsmerkmalen des Systems des unabhängigen Anspruchs 6. Hierzu dient ein Verfahren zum Überprüfen der von einem Netzknoten erfassten verbindungsbezogenen Kommunikationsdaten, die zur Entgeltabrechnung verwendet werden. Der Netzknoten kann ein vermittelnder Netzknoten beispielsweise eines digitalen oder analogen Festnetzes sein. Gemäß dem Prüfverfahren kann wenigstens eine vorbestimmte Test-Kommunikationsverbindung über wenigstens diesen Netzknoten zwischen einem rufenden und wenigstens einem gerufenen Teilnehmer auf- und wieder abgebaut werden. Bei den zur Verfügung stehenden Test-Kommunikationsverbindungen kann es sich beispielsweise um eine Dreierkonferenzverbindung oder eine weiter- oder umgeleitete Verbindung handeln. Zunächst wird der Zeitpunkt eines zur Entgeltabrechnung erforderlichen Ereignisses an einem vorbestimmten Messpunkt und in dem Netzknoten erfasst, an dem das Ereignis auch tatsächlich eintreten kann. Dann wird der Zeitpunkt wenigstens eines weiteren zur Entgeltabrechnung erforderlichen Ereignisses an dem vorbestimmten oder an wenigstens einem weiteren vorbestimmten Messpunkt und in dem Netzknoten erfasst, an dem dieses Ereignis auch tatsächlich eintreten kann. Der Ort, an dem das jeweilige Ereignis tatsächlich eintritt, ist zweckmäßigerweise diejenige Schnittstelle des die entgeltrelevanten Daten erfassenden Netzknotens, an der dieser Netzknoten das jeweilige Ereignis zuerst erkennen kann.

Die Messpunkte liegen außerhalb des Netzknotens. Da die Messpunkte entfernt von dem dem Netzknoten zugeordneten Ort des Auftretens der tatsächlichen Ereignisse angeordnet sind, fallen die Zeitpunkte des Auftretens des tatsächlichen Ereignisses und des an den Messpunkten erkannten Ereignisses auseinander. Diese zeitliche Differenz wird als systematischer Messfehler' zwischen dem Ort des tatsächlichen Ereignisses und dem jeweiligen Messpunkt bezeichnet. Der systematische Messfehler ist abhängig von der gewählten Testprozedur und muss somit für jedes Testszenario ermittelt werden. Um die Messgenauigkeit des Prüfverfahrens zu erhöhen, wird der systematische zeitliche Messfehler zwischen dem Ort des tatsächlichen Ereignisses und jedem vorbestimmten Messpunkt ermittelt. Nach Beendigung der Test-Kommunikationsverbindung wird ein Referenzdatensatz erzeugt, der zeitrelevante Daten ehthält, die aus den an dem Messpunkt oder den Messpunkten erfassten Ereignissen gebildet werden. Ferner wird in dem Netzknoten wenigstens ein verbindungsbezogener Kommunikationsdatensatz erzeugt, der zeitrelevante Daten enthält, welche die im Netzknoten erfassten Ereignisse beschreiben. Eine gesteigerte Messgenauigkeit wird nun dadurch erreicht, dass die zeitrelevanten Daten des Referenzdatensatzes um den ermittelten systematischen zeitlichen Messfehler korrigiert werden. Anschließend wird der bezüglich der Test-Kommunikationsverbindung erstellte Referenzdatensatz mit dem wenigstens einen Kommunikationsdatensatz verglichen. Zudem wird festgestellt, ob die Differenz zwischen den zeitrelevanten Daten des Kommunikationsdatensatzes und des Referenzdatensatzes innerhalb eines vorbestimmten Bereichs liegt. Auf diese Weise kann die Gültigkeit des Kommunikationsdatensatzes hinsichtlich zeitrelevanter Daten nachgewiesen werden. An dieser Stelle sei angemerkt, dass zeitrelevante Daten der Zeitpunkt des Verbindungsbeginns und/oder des Verbindungsendes, die Verbindungsdauer oder die Nutzungsdauer, der Beginn und/oder das Ende eines während einer bestehenden Verbindung angeforderten Dienstmerkmals sein können.

Zweckmäßigerweise handelt es sich daher bei den Ereignissen um den Beginn und/oder das Ende der Testkommunikationsverbindung und/oder den Beginn und/oder das Ende wenigstens eines während der bestehenden Telekommunikationsverbindung angeforderten Dienstmerkmals.

Bei einem ISDN-Anschluss wird der Verbindungsbeginn beispielsweise durch eine vom gerufenen Teilnehmer erzeugte Protokollnachricht "connect" und das Verbindungsende durch eine Protokollnachricht "disconnect" angezeigt, welche von dem Teilnehmer, welcher die Verbindung beendet, erzeugt wird.

Bei einem analogen Teilnehmeranschluss wird der Verbindungsbeginn durch einen Schleifenschluss und das Verbindungsende durch eine Schleifenunterbrechung signalisiert.

Zur Erfassung des Zeitpunktes des Auftretens eines Ereignisses an den Messpunkten sind diesen wenigstens eine Systemuhr zugeordnet. Alternativ kann jedem Messpunkt eine eigene Systemuhr zugeordnet sein. Um den Zeitpunkt des Auftretens eines Ereignisses in einem Messpunkt relativ zu einer Normalzeit, die beispielsweise vom Normalzeitsender DCF77 in Mainflingen ausgestrahlt wird, exakt bestimmen zu können, ist die Systemuhr oder sind die Systemuhren mit der Normalzeit synchronisiert. Die Häufigkeit der Synchronisation der Systemuhren hängt von der Ganggenauigkeit der jeweiligen Systemuhren ab. Bedingt durch die Übertragungszeit der Normalzeit zu den Systemuhren und deren Reaktionszeit ergibt sich bei der Synchronisation der Systemuhren ein Zeitverzug zur Normalzeit. Dieser systematische Fehler kann zur Korrektur der zeitrelevanten Daten des Referenzdatensatzes verwendet werden.

Zweckmäßigerweise werden die Messpunkte derart gewählt, dass der auftretende systematische Messfehler zwischen dem Ort des tatsächlichen Ereignisses und dem jeweiligen Messpunkt möglichst klein ist. Dies kann dadurch erreicht werden, dass als Messpunkt, an dem der Verbindungsbeginn erfasst werden soll, der gerufene Teilnehmer der Test-Kommunikationsverbindung und als Messpunkt, an dem das Verbindungsende erfasst werden soll, der Teilnehmer gewählt wird, der die Testkommunikationsverbindung beendet. In beiden Fällen liegt somit der gemessene Zeitpunkt vor dem tatsächlichen Verbindungsbeginn und/oder -ende.

Als Messpunkt, an dem der Nutzungsbeginn eines während einer bestehenden Testkommunikationsverbindung angeforderten Diensmerkmals erfasst werden soll, kann der initierende Teilnehmer der Nutzung des Dienstmerkmals und als Messpunkt, an dem das Nutzungsende des Dienstmerkmals erfasst werden soll, kann der Teilnehmer gewählt wird, der die Nutzung beendet.

Für die Bestimmung der Dauer einer Test-Kommunikationsverbindung muss im Messsystem die Zeitdauer zwischen den Ereignissen "Verbindungsbeginn" und "Verbindunsende" ermittelt werden. Die Dauer lässt sich als Zeitdifferenz zwischen den beiden Zeitpunkten, zu denen die Ereignisse eintreten, berechnen. Dies hat jedoch den Nachteil, dass sich Rundungsfehler bei der Darstellung des Beginn- und Endezeitpunktes addieren. Aus diesem Grunde umfassen die zeitrelevanten Daten des Referenzdatensatzes die Verbindungsdauer, die durch einen Zeitgeber ermittelt wird, der durch den am Messpunkt erfassten Verbindungsbeginn gestartet und durch das an dem oder einem anderen Messpunkt erfasste Verbindungsende angehalten wird. Dies hat den weiteren Vorteil, dass keine Messabweichungen durch Synchronisation der Systemuhr am Messpunkt mit dem Zeitnormal ensteht.

An dieser Stelle sei erwähnt, dass in den Ansprüchen und der gesamten Beschreibung der Begriff "Kommunikationsdaten" sowohl Kommunikationselemente als auch die Anfangs- und Endezeitpunkte und die Dauer der dazugehörenden Test-Kommunikationsverbindung und der angeforderten Dienstmerkmale umfaßt. Unter den Begriff "Kommunikationselement" fallen wiederum Parameter wie Zieladresse und Ursprungsadresse der Testeinheit, Datum der Kommunikationsverbindung, Dienstetyp, Dienstmerkmal und dergleichen. Dienste sind beispielsweise das Fernsprechen, ISDN- oder ANIS-Teilnehmer, Datenkommunikationen und dergleichen. Dienstmerkmale sind beispielsweise Dreierkonferenz, Makeln und dergleichen. Das oben genannte technische Problem wird ebenfalls durch ein Prüfsystem gelöst, welches wenigstens einen mit dem Netzknoten verbindbaren Rufsimulator enthält. Der Rufsimulator weist eine Systemuhr, eine Einrichtung zum Auf- und Abbauen wenigstens einer vorbestimmten Test-Kommunikationsverbindung, wenigstens eine Einrichtung zum Erzeugen von vorbestimmten, zur Entgeltabrechnung erforderlichen Ereignissen, wenigstens eine Einrichtung zum Erfassen der Zeitpunkte wenigstens einiger der zur Entgeltabrechnung erforderlichen Ereignisse und eine Einrichtung zum Erzeugen eines verbindungsbezogenen Referenzdatensatzes, der zeitrelevante Daten enthält, welche die erfassten Ereignisse beschreiben, auf. Der Netzknoten weist eine Einrichtung zum Erfassen der Zeitpunkte wenigstens einiger der zur Entgeltabrechnung erforderlichen Ereignisse, eine Systemuhr und eine Einrichtung zum Erzeugen wenigstens eines verbindungsbezogenen Kommunikationsdatensatzes, der zeitrelevante Daten enthält, die die im Netzknoten erfassten Ereignissen beschreiben, auf. Ferner ist eine dem Rufsimulator zugeordnete Korrektureinrichtung vorgesehen, in der ein Korrekturwert gespeichert ist, der dem systematischen zeitlichen Messfehler zwischen dem Auftreten eines tatsächlichen Ereignisses und dem Erfassen dieses Ereignisses an der Erfassungseinrichtung des Rufsimulators entspricht, wobei die Korrektur der zeitrelevanten Daten des Referenzdatensatzes um den gespeicherten systematischen zeitlichen Messfehler in der Korrektureinrichtung erfolgt. Eine Vergleichseinrichtung dient dem Vergleichen des Referenzdatensatzes mit dem wenigstens einen Kommunikationsdatensatz. In einer Feststelleinrichtung erfolgt die Feststellung, ob die Differenz zwischen den zeitrelevanten Daten des Kommunikationsdatensatzes und des Referenzdatensatzes innerhalb eines vorbestimmten Bereichs liegt.

Vorteilhafte Weiterbildungen sind Gegenstand der Unteransprüche.

Da der Rufsimulator und der Netzknoten üblicherweise unterschiedliche Datensatzformate benutzen, ist ferner eine erste Einrichtung zum Umsetzen des Formates des Referenzdatensatzes und eine zweite Einrichtung zum Umsetzen des Formates jedes Kommunikationsdatensatzes in ein einheitliches Format vorgesehen. Durch diese Maßnahme wird vermieden, dass nur Rufsimulatoren in dem Prüfsystem verwendet werden können, die mit dem Format der digitalen Vermittlungsstelle arbeiten.

In an sich bekannter Weise umfaßt ein Kommunikationsdatensatz und ein Referenzdatensatz mehrere vorbestimmte Datenfelder. In jedem Datenfeld eines Kommunikations- und Referenzdatensatzes sind Kommunikationsdaten abgelegt. Darüber hinaus kann jedem Datenfeld ein Wertebereich zugewiesen sein, innerhalb dessen darin enthaltene Kommunikationsdaten liegen müssen. So ist beispielsweise der Wertebereich für das Datenfeld "Datum der Kommunikationsverbindung" durch den Gregorianischen Kalender definiert, während der Wertebereich des Datenfeldes "Anfangszeitpunkt der Verbindung" durch den Zeitbereich von 0 bis 24 Uhr definiert ist. Der Wertebereich für das Datenfeld "Diensttyp" ist durch einen vorbestimmten Satz von Diensten definiert, während der Wertebereich des Datenfeldes "Dienstemerkmale" durch sämtliche zugelassenen Dienstemerkmale definiert ist.

Das Prüfsystem ist in der Lage, die einer Test-Kommunikationsverbindung zugeordneten Kommunikationsdatensätze zu erkennen, insbesondere dann, wenn aus Sicherheitsgründen für eine bestehende Kommunikationsverbindung in regelmäßigen Zeitabständen neue Kommunikationsdatensätze ermittelt werden. Ein Zusammengehören mehrerer Kommunikationsdatensätze zu einer Verbindung wird dadurch erkannt, dass in jedem Kommunikationsdatensatz derselbe verbindungsidentifizierende Dateninhalt (beispielsweise die Ziel- und/oder Ursprungsadresse) enthalten ist. Die Vergleichseinrichtung ist für diesen Fall derart ausgebildet, dass sie den verbindungsbezogenen Referenzdatensatz mit jedem der zusammengefügten verbindungsbezogenen Kommunikationsdatensätze vergleicht. Das Prüfsystem erkennt ferner, dass ein einzelner Kommunikationsdatensatz der zusammengefügten Kommunikationsdatensätze zu dem entsprechenden Referenzdatensatz gehört, wenn der Anfangs- und Endezeitstempel des einzelnen Kommunikationsdatensatzes innerhalb des durch den Anfangs- und Endezeitstempel des Referenzdatensatzes festgelegten Zeitintervalls liegt. Durch die Anfangszeitstempel der zusammengefügten Kommunikationsdatensätze ist eine zeitliche Reihenfolge auf den Kommunikationsdatensätzen definiert. Das Prüfsystem erkennt die Folge zusammengehörender Kommunikationsdatensätze als korrekt, wenn bei dem jeweils zeitlich unmittelbar folgenden Kommunikationsdatensatz der Anfangszeitstempel dem Endezeitstempel des unmittelbar vorhergehenden Kommunikationsdatensatzes entspricht, und wenn die durch den Anfangszeitstempel des ersten Kommunikationsdatensatzes und den Endezeitstempel des letzten Kommunikationsdatensatzes definierte Zeitspanne der durch den Anfangszeitstempel und den Endezeitstempel des Referenzdatensatzes festgelegten Gesamtdauer der Test-Kommunikationsverbindung entspricht.

Die Erfindung wird nachfolgend anhand eines Ausführungsbeispiels in Verbindung mit den beiliegenden Zeichnungen näher erläutert. Darin zeigen:
- Fig. 1: den schematischen Aufbau des erfindungsgemäßen Prüfsystems und
- Fig. 2: ein beispielhaftes Format eines Kommunikations-bzw. Referenzdatensatzes.

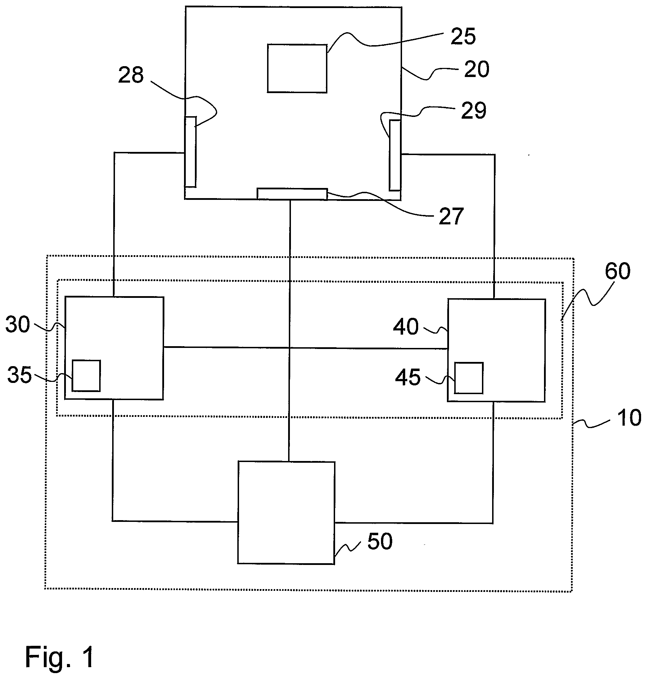

Fig. 1 zeigt den schematischen Aufbau eines beispielhaften Prüfsystems 10, welches an wenigstens einen zu prüfenden Netzknoten eines Telekommunikationsnetzes, welcher im vorliegenden Beispiel eine digitale Vermittlungsstelle 20 ist, angeschlossen ist. Das Prüfsystem 10 enthält einen Rufsimulator 60, auch Callsimulator genannt, welcher beispielsweise eine Einrichtung 30 zum Simulieren eines rufenden Teilnehmers und eine Einrichtung 40 zum Simulieren eines gerufenen Teilnehmers aufweist. Den Einrichtungen 30 und 40 sind jeweils eine Systemuhr 35 bzw. 45 zugeordnet, die mit der Normalzeit einer Normalzeituhr, beispielweise dem DCF77-Sender, synchronisiert werden. Alternativ kann den beiden Einrichtungen 30 und 40 eine gemeinsame Systemuhr zugeordnet sein. Der Rufsimulator 60 und die Vermittlungsstelle 20 sind mit einer Auswerteeinrichtung 50 verbunden. Die Einrichtungen 30 und 40 des Rufsimulator 60 sind beispielsweise über jeweils einen teilnehmerseitigen Telekommunikationsanschluss mit der zugeordneten digitalen Vermittlungsstelle 20 verbunden. In Anlehnung an die Norm ISO 9646 kann der Rufsimulator 60 und die Auswerteeinrichtung 50 über jeweils einen sogenannten Steuer- und Beobachtungspunkt (Points of Control and Observation, PCO) mit einer zu prüfenden Implementation (Implementation Under Test, IUT), die in der zu prüfenden digitalen Vermittlungsstelle 20 eingebettet ist, kommunizieren. Der Rufsimulator 60 ist ferner derart ausgebildet, dass er in Abhängigkeit eines ausgewählten Testfalls die dazugehörenden Kommunikationselemente - auch Abstract Service Primitives (ASP) - genannt, über den ersten Steuer- und Beobachtungspunkt und den jeweiligen teilnehmerseitigen Telekommunikationsanschluss zur digitalen Vermittlungsstelle 20 übertragen kann. Bei den Kommunikationselementen, die zuvor in Abhängigkeit des ausgewählten Testfalls in dem Rufsimulator abgelegt worden sind, handelt es sich beispielsweise um die Zieladresse, die Ursprungsadresse, das Datum der Test-Kommunikationsverbindung, Dienstetypen und Dienstemerkmale. Über eine genormte Hardware-Schnittstelle 27 der zu prüfenden digitalen Vermittlungsstelle 20 können die von der digitalen Vermittlungsstelle 20 erzeugten Kommunikationsdatensätze über den zweiten Steuer- und Beobachtungspunkt zur Auswerteeinrichtung 50 übertragen werden.

Nachfolgend wird die Funktions- und Arbeitsweise des Prüfsystems 10 anhand eines Szenarios näher erläutert.

Allgemein gesprochen ist Sinn und Zweck des Prüfsystems 10 die Validierung von in der digitalen Vermittlungsstelle 20 erzeugten Kommunikationsdatensätzen, die zur Entgeltberechnung einer kostenpflichtigen Kommunikationsverbindung verwendet werden. Im Speziellen ist Sinn und Zweck des Prüfsystems 10 die Validierung der Erfassung von zeitrelevanten Daten, wie zum Beispiel von Beginn- und Endezeitpunkten sowie der Verbindungsdauer einer Kommunikationsverbindung, in einem vermittelnden Netzknoten. Nur wenn die Kommunikationsdatensätze korrekt erzeugt werden, kann eine fehlerfreie Entgeltberechnung stattfinden.

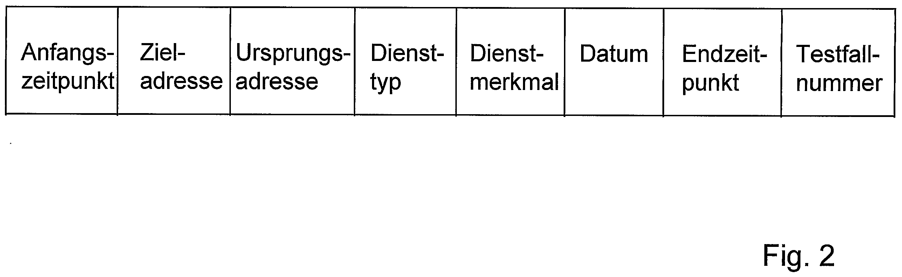

Um eine Überprüfung der Kommunikationsdatensätze durchführen zu können, müssen die Verbindungsdaten, die innerhalb der Vermittlungsstelle 20 zur Erstellung der Kommunikationsdatensätze verwendet werden, als Referenzdatensätze im Rufsimulator zur Verfügung stehen. Als Verbindungsdaten werden Informationen angesehen, die vom Rufsimulator 60 zum Auf- und Abbau einer Verbindung benötigt und zur Vermittlungsstelle 20 übermittelt werden. Dabei erzeugt der Rufsimulator 60 aus den Verbindungsdaten, die zur Vermittlungsstelle 20 übertragen werden und den während des Testablaufs erfassten zeitrelevanten Daten, einen verbindungsbezogenen Referenzdatensatz. Eine beispielhafte Struktur eines Kommunikations- oder Referenzdatensatzes ist in Fig. 2 gezeigt. Der Kommunikations- oder Referenzdatensatz setzt sich beispielsweise aus den Datenfeldern "Anfangszeitpunkt", "Zieladresse", "Ursprungsadresse", "Diensttyp", "Dienstmerkmal", "Datum", "Endezeitpunkt" und "Testfallnummer" zusammen. An dieser Stelle sei angemerkt, dass der Referenzdatensatz anstelle eines Beginnzeitpunktes oder Endezeitpunktes die Verbindungsdauer enthalten kann.

Bei der Validierung von Kommunikationsdatensätze ist es erforderlich, nachweisen zu können, dass die darin gespeicherten zeitrelevanten Daten, wie zum Beispiel Verbindungsbeginn, -ende und -dauer innerhalb eines vorgegebenen Tolereanzbereichs von beispielsweise 500 ms liegen. Demzufolge sind an das Prüfsystem hohe Anforderungen an die Erfassung der Zeitpunkte für den Beginn, das Ende und die Dauer einer Verbindung zu stellen, da diese zeitrelevanten Daten in einem Referenzdatensatz den tatsächlichen Zeitpunkt eines Ereignisses und die tatsächliche Verbindungsdauer darstellen.

Die Messgenauigkeit des Prüfsystems 10 hängt im Wesentlichen von der Abweichung der verwendeten Systemuhren 35 und 45 von einem Zeitnormal, welches über den Normalzeitsender DCF77 verbreitet werden kann, sowie systematischen und zufälligen Messfehlern ab. Die zufälligen Messfehler ergeben sich zum Beispiel aus Rundungsfehlern und schwankenden Verarbeitungszeiten des Rufsimulators 60. Sie bilden den Bereich, in dem keine Aussage möglich ist, ob die in den Kommunikationsdatensätzen gespeicherten zeitrelevanten Daten im vorbestimmten Toleranzbereich liegen.

Systematische Messfehler entstehen dadurch, dass die Ereignisse "Verbindungsbeginn" und "Verbindungsende" an unterschiedlichen Orten auftreten und erfasst werden, nämlich zum einen treten sie an einer vorbestimmten Schnittstelle 28 oder 29 der Vermittlungsstelle 20 auf und zum anderen werden sie an einer vorbestimmten Schnittstelle oder einem vorbestimmten Messpunkt des Rufsimulators 60 erfasst. Der Messpunkt liegt außerhalb der Vermittlungsstelle 20, um eine Beeinflussung der Vermittlungsstelle 20 durch das Anschalten des Rufsimulators 60 zu vermeiden. Dies hat zur Folge, dass nicht das tatsächliche Ereignis "Verbindungsanfang" oder "Verbindungsende" erkannt wird, sondern nur Ereignisse, die den tatsächlichen Ereignissen vorausgehen oder nachfolgen. Der systematische Messfehler ist abhängig von der gewählten Testprozedur und wird vorab ermittelt.

Die Kriterien für die Auswahl geeigneter Messpunkte erfolgt anhand eines beispielhaften Testfalls, der aus einem einzelnen Testschritt oder aus mehreren parallel oder sequentiell laufenden Testschritten bestehen kann. Für den vorliegenden Testfall sei angenommen, dass eine gewöhnliche Fernsprechverbindung zwischen zwei ISDN-Endgeräten, das sind die Einrichtungen 30 und 40, hergestellt werden soll. Als Dienstetyp wird daher der Dienst "Fernsprechverbindung zwischen ISDN-Geräten" verwendet. Es sei angenommen, dass die Einrichtung 30 den rufenden Teilnehmer und die Einrichtung 40 den gerufenen Teilnehmer simuliert. Durch den ausgewählten Testfall sind auch die Ziel- und Ursprungsadresse der beiden Teilnehmer sowie der systematische Messfehler festgelegt. Datum und Anfangszeitpunkt ergeben sich durch den Zeitpunkt des Aufbaus der Test-Kommunikationsverbindung. All diese, zu dem ausgewählten Testfall gehörenden Kommunikationselemente sind in einem Speicher des Rufsimulators 60 abgelegt. Der systematische Messfehler kann auch in der Auswerteeinrichtung 50 gespeichert werden.

Der Ort der Messpunkte wird vorzugsweise so gewählt, dass der dazugehörende systematische Messfehler möglichst gering wird. Für das oben genannte Beispiel liegt somit der Messpunkt, in dem das Ereignis "Verbindungsbeginn" erfasst wird, im gerufenen Teilnehmer 40. Das erfasste Ereignis "Verbindungsbeginn" entspricht der Protokollnachricht, die vom gerufenen Teilnehmer 40 zur Einleitung einer Verbindung erzeugt wird. Der Messpunkt, in dem das Ereignis "Verbindungsende" erfasst wird, liegt bei dem Teilnehmer, welcher die Verbindung beendet. Denn das Ende einer Verbindung wird der Vermittlungsstelle dadurch signalisiert, dass der entsprechende Teilnehmer die Protokollnachricht "disconnect" erzeugt. Im vorliegenden Beispiel sei angenommen, dass der Teilnehmer 40 die Verbindung auslöst. Die für diesen Testfall zu berücksichtigenden sytematischen Fehler sind bekannt und beispielsweise in der Auswerteeinrichtung 50 gespeichert. Die systematischen Messfehler entsprechen etwa der Laufzeit, die die Protokollnachricht "connect" vom Teilnehmer 40 zur Vermittlungsstelle 20 bzw. die Protokollnachricht "disconnect vom Teilnehmer 40 zur Vermittlungsstelle benötigt.

Vor dem Start des Tests muß sichergestellt werden, dass alle nicht zur Testkonfiguration gehörenden Anschlüsse der digitalen Vermittlungsstelle 20 inaktiv sind und während des Testablaufs nicht aktiviert werden können. Dies ist eine Voraussetzung, um prüfen zu können, ob die während des Testlaufs erzeugten Kommunikationsdatensätze einem bestimmten Referenzdatensatz zugeordnet werden können.

Zu Beginn der Testprozedur werden die zu dem Test gehörenden Kommunikationselemente von der Einrichtung 30 des Rufsimulator 60 zur digitalen Vermittlungsstelle 20 übertragen. In Abhängigkeit von den empfangenen Kommunikationselementen baut die digitale Vermittlungsstelle 20 die ausgewählte Test-Kommunikationsverbindung zu dem Teilnehmer 40 mit der entsprechenden Zieladresse auf.

Mit Hilfe der Systemuhr 45 wird der Zeitpunkt des Auftritts des Ereignisses "Verbindungsbeginn", der mit der Erzeugung der Protokollnachricht "connect" zusammenfällt, in der Einrichtung 40 erfasst und in den zu dieser Testverbindung gehörenden Referenzdatensatz geschrieben. Gleichzeitig wird ein Zeitgeber (nicht dargestellt) durch das Ereignis "Verbindungsbeginn" gestartet, um die Dauer der Testverbindung messen zu können. In ähnlicher Weise erfasst die Vermittlungsstelle 20 mit Hilfe der Systemuhr 25 den Zeitpunkt, an dem die Protokollnachricht "connect" an der Schnittstelle 29 angekommen ist. Dieser Zeitpunkt wird in den zur Testverbindung gehörenden Kommunikationsdatensatz geschrieben.

Zum Auslösen der Test-Kommunikationsverbindung erzeugt der Teilnehmer 40 die Protokollnachricht "disconnect" und überträgt diese zur Vermittlungsstelle 20. Mit Hilfe der Systemuhr 45 wird der Zeitpunkt des Auftritts des Ereignisses "Verbindungsende", der mit der Erzeugung der Protokollnachricht "disconnect" zusammenfällt, in der Einrichtung 40 erfasst und in den zu dieser Testverbindung gehörenden Referenzdatensatz geschrieben. Gleichzeitig wird der Zeitgeber durch das Ereignis "Verbindungsende" gestoppt, um die Messung der Verbindungsdauer zu beenden. Nach dem Ende der Test-Kommunikationsverbindung erzeugt der Rufsimulator 60 aus den zu dem ausgewählten Test gehörenden Kommunikationselementen sowie dem Anfangs- und Endezeitpunkt der Test-Kommunikationsverbindung einen Referenzdatensatz, dessen beispielhaftes Format in Fig. 2 dargestellt ist. Anstelle des Endezeitpunktes kann auch die Verbindungsdauer in den Referenzdatensatz geschrieben werden. An dieser Stelle sei erwähnt, dass der Anfangs- und Endezeitpunkt oder die Verbindungsdauer vor dem Eintrag in den Referenzdatensatz oder erst in der Auswerteeinrichtung 50 um den systematischen Messfehler korrigiert wird. Dieser Referenzdatensatz wird dann zur Auswerteeinrichtung 50 übertragen. In ähnlicher Weise erfasst die Vermittlungsstelle 20 mit Hilfe einer Systemuhr 25 den Zeitpunkt, an dem die Protokollnachricht "disconnect" an der Schnittstelle 29 angekommen ist. Auch die digitale Vermittlungsstelle 20 bildet aus den empfangenen Kommunikationselementen und dem Anfangs- und Endezeitpunkt der Test-Kommunikationsverbindung einen entsprechenden verbindungsbezogenen Kommunikationsdatensatz. Der erzeugte Kommunikationsdatensatz wird ebenfalls zur Auswerteeinrichtung 50 übertragen.

In der Auswerteeinrichtung 50 können, wenn noch nicht erfolgt, die im Referenzdatensatz gespeicherten zeitrelevanten Daten, wie zum Bespiel Beginn, Ende und/oder Dauer der Verbindung um den systematischen Messfehler korrigiert werden. Wird anstelle des Verbindungsendes nur die Verbindungsdauer im Referenzdatensatz übertragen, kann das Verbindungsende zunächst aus dem im Referenzdatensatz gespeicherten Verbindungsbeginn und der Verbindungsdauer berechnet werden. Anschließend werden die korrespondierenden Zeitdaten des Referenzdatensatzes und des Kommunikationsdatensatzes voneinander subtrahiert, um festzustellen, ob der jeweilige Differenzwert innerhalb des vorgeschriebenen Toleranzbereichs liegt.

Es sei darauf hingewiesen, dass mit Hilfe des Rufsimulators 60 gleichzeitig mehrere Test-Kommunikationsverbindungen über die digitale Vermittlungsstelle 20 aufgebaut werden können. Denkbar ist es auch, dass mehrere Test-Kommunikationsverbindungen über die digitale Vermittlungsstelle 20 zwischen verschiedenen Rufsimulatoren aufgebaut werden können. Die Auswerteeinrichtung ist hierfür derart ausgebildet, dass die Referenz- und Kommunikationsdatensätze verschiedener Test-Kommunikationsverbindungen parallel ausgewertet und auf Richtigkeit geprüft werden können.

## Patentansprüche

1. Verfahren zum Überprüfen der von einem Netzknoten erfassten verbindungsbezogenen Kommunikationsdaten, die zur Entgeltabrechnung verwendet werden, wobei:
wenigstens eine vorbestimmte Test-Kommunikationsverbindung über wenigstens diesen Netzknoten auf- und wieder abgebaut wird;
der Zeitpunkt eines zur Entgeltabrechnung erforderlichen Ereignisses an einem vorbestimmten Messpunkt und in dem Netzknoten erfasst wird;
der Zeitpunkt wenigstens eines weiteren zur Entgeltabrechnung erforderlichen Ereignisses an dem vorbestimmten oder an wenigstens einem weiteren vorbestimmten Messpunkt und in dem Netzknoten erfasst wird, wobei die Messpunkte außerhalb des Netzknotens liegen;
ein Referenzdatensatz erzeugt wird, der zeitrelevante Daten enthält, die aus den an dem Messpunkt oder den Messpunkten erfassten Ereignissen gebildet werden;
in dem Netzknoten wenigstens ein verbindungsbezogener Kommunikationsdatensatz erzeugt wird, der zeitrelevante Daten enthält, die die im Netzknoten erfassten Ereignisse beschreiben;
der Referenzdatensatz mit dem wenigstens einen Kommunikationsdatensatz verglichen wird; und
festgestellt wird, ob die Differenz zwischen den zeitrelevanten Daten des Kommunikationsdatensatzes und des Referenzdatensatzes innerhalb eines vorbestimmten Bereichs liegt;
wobei
- die zeitrelevanten Daten des Referenzdatensatzes die Verbindungsdauer umfassen, die durch die folgenden Schritte ermittelt wird:
ein Zeitgeber wird durch den am Messpunkt erfassten Verbindungsbeginn gestartet und durch das an dem oder einem anderen Messpunkt erfasste Verbindungsende angehalten, oder
die zeitrelevanten Daten des Referenzdatensatzes die Nutzungsdauer wenigstens eines während der Test-Kommunikationsverbindung angeforderten Dienstmerkmals umfassen, die durch die folgenden Schritte ermittelt wird:
ein Zeitgeber wird durch den an einem Messpunkt erfassten Beginn des Dienstmerkmals gestartet und durch das an dem oder einem anderen Messpunkt erfasste Ende der Nutzung des Dienstmerkmals angehalten, und wobei die zeitrelevanten Daten des Referenzdatensatzes den an dem oder den Messpunkten erfassten Zeitpunkt umfassen,
wobei jedem Messpunkt jeweils eine Systemuhr oder eine gemeinsame Systemuhr zugeordnet ist, **dadurch gekennzeichnet, dass** der systematische zeitliche Messfehler zwischen dem Ort des Auftretens eines tatsächlichen Ereignisses und dem Erfassen des Ereignisses an dem jeweiligen vorbestimmten Messpunkt ermittelt wird und die zeitrelevanten Daten des Referenzdatensatzes um den ermittelten systematischen zeitlichen Messfehler korrigiert werden, wobei ein Abgleich zwischen den Systemuhren und einem Zeitnormal durchgeführt wird, und wobei
die zwischen der oder den Systemuhren und dem Zeitnormal ermittelte Zeitdifferenz im Abgleichzeitpunkt zur Korrektur des in den zeitrelevanten Daten des Referenzdatensatzes enthaltenen Zeitpunktes verwendet werden.

2. Verfahren nach Anspruch 1,
**dadurch gekennzeichnet, dass**
die Ereignisse den Beginn und das Ende der Testkommunikationsverbindung und/oder den Beginn und das Ende wenigstens eines während der bestehenden Test-Kommunikationsverbindung angeforderten Dienstmerkmals darstellen.

3. Verfahren nach Anspruch 1 oder 2,
**dadurch gekennzeichnet, dass**
als Netzknoten ein vermittelnder Netzknoten verwendet wird.

4. Verfahren nach einem der Ansprüche 2 oder 3,
**dadurch gekennzeichnet, dass**
als Messpunkt, an dem der Verbindungsbeginn erfasst werden soll, der gerufene Teilnehmer der Test-Kommunikationsverbindung und als Messpunkt, an dem das Verbindungsende erfasst werden soll, der Teilnehmer gewählt wird, der die Testkommunikationsverbindung beendet.

5. Verfahren nach einem der Ansprüche 2 bis 4,
**dadurch gekennzeichnet, dass**
als Messpunkt, an dem der Nutzungsbeginn eines während einer bestehenden Testkommunikationsverbindung angeforderten Dienstmerkmals erfasst werden soll, der initiierende Teilnehmer der Nutzung des Dienstmerkmals und als Messpunkt, an dem das Nutzungsende des Dienstmerkmals erfasst werden soll, der Teilnehmer gewählt wird, der die Nutzung beendet.

6. System zum Überprüfen der von einem Netzknoten erfassten verbindungsbezogenen Kommunikationsdaten, die zur Entgeltabrechnung verwendet werden, mit wenigstens einem mit dem Netzknoten (20) verbindbaren Rufsimulator (60), der folgende Merkmale aufweist:
wenigstens eine Systemuhr (35, 45), eine Einrichtung (30, 40) zum Auf- und Abbauen wenigstens einer vorbestimmten Test-Kommunikationsverbindung;
wenigstens eine Einrichtung zum Erzeugen von vorbestimmten, zur Entgeltabrechnung erforderlichen Ereignissen;
wenigstens eine Einrichtung zum Erfassen der Zeitpunkte wenigstens einiger der zur Entgeltabrechnung erforderlichen Ereignisse an einem vorbestimmten oder an wenigstens einem weiteren vorbestimmten Messpunkt, wobei jedem Messpunkt jeweils eine oder eine gemeinsame der Systemuhren (35, 45) zugeordnet ist,
eine Einrichtung zum Erzeugen eines verbindungsbezogenen Referenzdatensatzes, der zeitrelevante Daten enthält, die die erfassten Ereignisse beschreiben; wobei
der Netzknoten (20) aufweist:
eine Einrichtung zum Erfassen der Zeitpunkte wenigstens einiger der zur Entgeltabrechnung erforderlichen Ereignissen,
eine Systemuhr (25),
eine Einrichtung zum Erzeugen wenigstens eines verbindungsbezogenen Kommunikationsdatensatzes, der zeitrelevante Daten enthält, die die im Netzknoten erfassten Ereignisse beschreiben;
einer Einrichtung (50) zum Vergleichen des Referenzdatensatzes mit dem wenigstens einen Kommunikationsdatensatz und
einer Einrichtung zum Feststellen, ob die Differenz zwischen den zeitrelevanten Daten des Kommunikationsdatensatzes und des Referenzdatensatzes innerhalb eines vorbestimmten Bereichs liegt, wobei die Ereignisse den Beginn und das Ende einer Testkommunikationsverbindung und/oder den Beginn und das Ende wenigstens eines während der bestehenden Testkommunikationsverbindung angeforderten Dienstmerkmals darstellen, und wobei
das System einen Zeitgeber aufweist, wobei
- die zeitrelevanten Daten des Referenzdatensatzes die Verbindungsdauer umfassen, die durch die folgenden Schritte ermittelt wird:
d er Zeitgeber wird durch den erfassten Verbindungsbeginn gestartet und durch das erfasste Verbindungsende angehalten, oder
- die zeitrelevanten Daten des Referenzdatensatzes die Nutzungsdauer wenigstens eines während der Test-Kommunikationsverbindung angeforderten Dienstmerkmals umfassen, die durch die folgenden Schritte ermittelt wird:
der Zeitgeber wird durch den erfassten Beginn des Dienstmerkmals gestartet und durch das erfasste Ende der Nutzung des Dienstmerkmals angehalten, und wobei die zeitrelevanten Daten des Referenzdatensatzes einen von der Erfassungseinrichtung erfassten Zeitpunkt umfassen, und wobei die Systemuhren (35, 45) des Rufsimulators (60) jeweils zum Empfangen einer Normalzeit ausgebildet sind, wobei ein Abgleich zwischen den Systemuhren und der Normalzeit erfolgt, und wobei die zwischen der oder den Systemuhren (35, 45) und dem Zeitnormal ermittelte Zeitdifferenz im Abgleichzeitpunkt zur Korrektur des in den zeitrelevanten Daten des Referenzdatensatzes enthaltenen Zeitpunktes verwendet werden, **gekennzeichnet durch** eine dem Rufsimulator (60) zugeordnete Korrektureinrichtung, in der ein Korrekturwert gespeichert ist, der dem systematischen zeitlichen Messfehler zwischen dem Ort des Auftretens eines tatsächlichen Ereignisses und dem Erfassen des Ereignisses an der Erfassungseinrichtung des Rufsimulators entspricht, wobei die Korrektur der zeitrelevanten Daten des Referenzdatensatzes um den gespeicherten systematischen zeitlichen Messfehler in der Korrektureinrichtung erfolgt.

7. System nach Anspruch 6,
**dadurch gekennzeichnet, dass**
der Netzknoten (20) ein vermittelnder Netzknoten ist.

## Claims

1. A method for verifying connection-related communication data captured by a network node, which data are used for billing purposes, comprising:
establishing and terminating at least one predetermined test communication connection via at least said network node;
capturing, at a predetermined measuring point and in said network node, the point in time of an event required for billing purposes;
capturing, at said predetermined measuring point or at at least one further predetermined measuring point and in said network node, the point in time of at least one further event required for billing purposes, wherein the measuring points are located outside the network node;
generating a reference data set which contains time-relevant data created from the events captured at the measuring point or points;
generating, in the network node, at least one connection-related communication data set which contains time-relevant data describing the events captured in the network node;
comparing the reference data set with the at least one communication data set; and
determining whether the difference between the time-relevant data of the communication data set and the reference data set is within a predetermined range; wherein
the time-relevant data of the reference data set comprise the connection duration which is determined by the following steps:
a timer is started by the start of the connection as captured at the measuring point and is stopped by the termination of the connection as captured at the one or another measuring point; or
the time-relevant data of the reference data set comprise the duration of use of at least one service feature requested during the test communication connection, which is determined by the following steps:
a timer is started by the start of the service feature as captured at a measuring point and is stopped by the termination of the use of the service feature as captured at the one or another measuring point, and
wherein the time-relevant data of the reference data set comprise the point in time captured at the measuring point or points, wherein each measuring point has associated therewith a system clock or a shared system clock;
**characterized in that**
the systematic temporal measuring error is determined between the location of occurrence of an actual event and the capturing of the event at the respective predetermined measuring point, and the time-relevant data of the reference data set are corrected by the determined systematic temporal measuring error, wherein a calibration is performed between the system clocks and a time standard; and wherein
the time difference determined between the system clock or system clocks and the time standard at the time of calibration is used for correcting the point in time contained in the time-relevant data of the reference data set.

2. The method according to claim 1, **characterized in that** the events represent the start and the termination of the test communication connection and/or the start and the termination of at least one service feature requested during the established test communication connection.

3. The method according to claim 1 or 2,
**characterized in that** a switching network node is used as said network node.

4. The method according to any one of claims 2 or 3,
**characterized in that** the called subscriber of the test communication connection is chosen as the measuring point at which the start of the connection is to be captured, and that the subscriber who terminates the test communication connection is chosen as the measuring point at which the termination of the connection is to be captured.

5. The method according to any one of claims 2 to 4,
**characterized in that**
the subscriber initiating use of the service feature is chosen as the measuring point at which the start of use of a service feature requested during an established test communication connection is to be captured, and that the subscriber which terminates the use is chosen as the measuring point at which the termination of the use of the service feature is to be captured.

6. A system for verifying connection-related communication data captured by a network node, which data are used for billing purposes, comprising:
at least one call simulator (60) which can be connected to the network node (20) and which includes the following features:
at least one system clock (35, 45);
a means (30, 40) for establishing and terminating at least one predetermined test communication connection;
at least one means for generating predetermined events required for billing purposes;
at least one means for capturing the points in time of at least some of the events required for billing purposes at a predetermined measuring point or at at least one further predetermined measuring point, wherein each measuring point has associated therewith a respective system clock or a shared one of the system clocks (35, 45);
a means for generating a connection-related reference data set which contains time-relevant data describing the captured events;
wherein the network node (20) comprises:
a means for capturing the points in time of at least some of the events required for billing purposes;
a system clock (25);
a means for generating at least one connection-related communication data set which contains time-relevant data describing the events captured in the network node;
a means (50) for comparing the reference data set with the at least one communication data set; and
a means for determining whether the difference between the time-relevant data of the communication data set and the reference data set is within a predetermined range;
wherein
the events represent the start and the termination of a test communication connection and/or the start and the termination of at least one service feature requested during the established test communication connection; and wherein
the system comprises a timer, wherein
the time-relevant data of the reference data set comprise the connection duration, which is determined by the following steps:
the timer is started by the start of the connection as captured and is stopped by the termination of the connection as captured; or
the time-relevant data of the reference data set comprise the duration of use of at least one service feature requested during the test communication connection, which is determined by the following steps: the timer is started by the start of the service feature as captured and is stopped by the termination of the use of the service feature as captured, and wherein the time-relevant data of the reference data set comprise a point in time captured by the capturing means, and wherein the system clocks (35, 45) of the call simulator (60) are each adapted to receive a time standard, wherein a calibration is performed between the system clocks and the time standard;
and wherein the time difference determined between the system clock or system clocks (35, 45) and the time standard at the time of calibration is used for correcting the point in time contained in the time-relevant data of the reference data set; **characterized by**
a correction means associated with the call simulator (60), which stores a correction value that corresponds to the systematic temporal measuring error between the location of occurrence of an actual event and the capturing of the event at the capturing means of the call simulator, wherein the correction of the time-relevant data of the reference data set by the stored systematic temporal measuring error is performed in the correction means.

7. The system according to claim 6,
**characterized in that** the network node (20) is a switching network node.

## Revendications

1. Procédé de contrôle des données de communication relatives aux connexions, détectées par un noeud de réseau, qui sont utilisées pour la facturation de frais, dans lequel :
au moins une connexion de communication d'essai prédéfinie est établie et supprimée par l'intermédiaire d'au moins ce noeud de réseau ;
le moment d'un événement prédéfini nécessaire pour la facturation des frais est détecté en un point de mesure prédéfini et dans le noeud de réseau ;
le moment au moins d'un autre événement nécessaire pour la facturation des frais est détecté au point de mesure prédéfini ou en au moins un autre point de mesure prédéfini et dans le noeud de réseau, les points de mesure se situant à l'extérieur du noeud de réseau ;
un ensemble de données de référence est produit, qui contient des données de temps, lesquelles sont formées à partir des événements détectés au point de mesure ou aux points de mesure ;
dans le noeud de réseau, au moins un ensemble de données de communication relatives aux connexions est produit, qui contient des données de temps, lesquelles décrivent les événements détectés dans le noeud de réseau ;
l'ensemble de données de référence est comparé à l'au moins un ensemble de données de communication ; et sachant qu'il est établi si la différence entre les données de temps de l'ensemble de données de communication et l'ensemble de données de référence se situe à l'intérieur d'une plage prédéfinie ;
- les données de temps de l'ensemble de données de référence englobant la durée de connexion, qui est déterminée par les étapes suivantes :
une horloge est démarrée par le début de connexion détecté au point de mesure et arrêtée par la fin de connexion détectée à l'autre ou à un autre point de mesure, ou
les données de temps de l'ensemble de données de référence englobent la durée d'utilisation d'au moins une caractéristique de service demandée pendant la connexion de communication d'essai, qui est déterminée par les étapes suivantes :
une horloge est démarrée par le début de la caractéristique de service détecté en un point de mesure et arrêtée par la fin de l'utilisation de la caractéristique de service détectée au ou en un autre point de mesure, et les données de temps de l'ensemble de données de référence englobant le moment détecté au ou aux points de mesure, respectivement une heure système ou une heure système commune étant associée à chaque point de mesure, **caractérisé en ce que** l'erreur de mesure temporelle systématique entre le lieu de l'apparition d'un événement effectif et la détection de l'événement au point de mesure prédéfini respectif est déterminée et les données de temps de l'ensemble de données de référence sont corrigées au moyen de l'erreur de mesure temporelle systématique déterminée, un ajustement entre les heures système et une normale de temps étant mis en oeuvre, et la différence de temps déterminée entre l'heure ou les heures système et la normale de temps étant utilisée au moment de l'ajustement pour corriger le moment contenu dans les données de temps de l'ensemble de données de référence.

2. Procédé selon la revendication 1, **caractérisé en ce que** les événements représentent le début et la fin de la connexion de communication d'essai et/ou le début et la fin d'au moins une caractéristique de service demandée pendant la connexion de communication d'essai déjà présente.

3. Procédé selon la revendication 1 ou 2, **caractérisé en ce qu'**un noeud de réseau de transmission est utilisé comme noeud de réseau.

4. Procédé selon l'une des revendications 2 ou 3, **caractérisé en ce que** l'abonné appelé de la connexion de communication d'essai est choisi comme point de mesure, auquel le début de connexion vise à être détecté, et l'abonné qui met fin à la connexion de communication d'essai est choisi comme point de mesure, auquel la fin de connexion vise à être détectée.

5. Procédé selon l'une des revendications 2 à 4, **caractérisé en ce que** l'abonné initiateur de l'utilisation de la caractéristique de service est choisi comme point de mesure, auquel le début d'utilisation d'une caractéristique de service demandée pendant une connexion de communication d'essai déjà présente vise à être détecté, et l'abonné qui met fin à l'utilisation est choisi comme point de mesure, auquel la fin de l'utilisation de la caractéristique de service vise à être détectée.

6. Système de contrôle des données de communication relatives aux connexions détectées par un noeud de réseau, qui sont utilisées pour la facturation de frais, comprenant au moins un simulateur d'appel (60) pouvant être connecté au noeud de réseau (20), et qui comprend les caractéristiques suivantes :
au moins une heure système (35, 45),
un dispositif (30, 40) servant à établir et à supprimer au moins une connexion de communication d'essai prédéfinie ;
au moins un dispositif servant à produire des événements prédéfinis nécessaires pour la facturation des frais ;
au moins un dispositif servant à détecter les moments d'au moins certains des événements nécessaires pour la facturation des frais en un point de mesure prédéfini ou en au moins un autre point de mesure prédéfini, respectivement une heure ou une heure commune des heures système (35, 45) étant associée à chaque point de mesure,
un dispositif servant à produire un ensemble de données de référence relatives aux connexions, qui contient des données de temps décrivant les événements détectés ;
le noeud de réseau (20) comprenant :
un dispositif servant à détecter les moments d'au moins certains des événements nécessaires pour la facturation des frais,
une heure système (25),
un dispositif servant à produire au moins un ensemble de données de communication relatives aux connexions, qui contient des données de temps décrivant les événements détectés dans le noeud de réseau ;
un dispositif (50) servant à comparer l'ensemble de données de référence à l'au moins un ensemble de données de communication et un dispositif servant à établir si la différence entre les données de temps de l'ensemble de données de communication et l'ensemble de données de référence se situe à l'intérieur d'une plage prédéfinie,
les événements représentant le début et la fin d'une connexion de communication d'essai et/ou la fin et le début au moins d'une caractéristique de service demandée pendant la connexion de communication d'essai déjà présente, et le système comprenant une horloge,
- les données de temps de l'ensemble de données de référence englobant la durée de connexion qui est déterminée par les étapes suivantes :
l'horloge est démarrée par le début de connexion détecté et arrêtée par la fin de connexion détectée, ou
- les données de temps de l'ensemble de données de référence englobant la durée d'utilisation au moins d'une caractéristique de service demandée pendant la connexion de communication d'essai, qui est déterminée par les caractéristiques suivantes :
l'horloge est démarrée par le début détecté de la caractéristique de service et arrêtée par la fin détectée de l'utilisation de la caractéristique de service, et les données de temps de l'ensemble de données de référence englobant un moment détecté par le dispositif de détection, et les heures système (35, 45) du simulateur d'appel (60) étant conçues chacune pour recevoir un temps normal, un ajustement étant effectué entre les heures système et le temps normal, et la différence de temps déterminée entre l'heure ou les heures système (35, 45) et le temps normal étant utilisée au moment de l'ajustement pour corriger le moment contenu dans les données de temps de l'ensemble de données de référence,
**caractérisé par** un dispositif de correction qui est associé au simulateur d'appel (60) et dans lequel une valeur de correction est mise en mémoire, qui correspond à l'erreur de mesure temporelle systématique entre le lieu de l'apparition d'un événement effectif et la détection de l'événement sur le dispositif de détection du simulateur d'appel, la correction des données de temps de l'ensemble de données de référence étant effectuée dans le dispositif de correction au moyen de l'erreur de mesure temporelle systématique mise en mémoire.

7. Système selon la revendication 6, **caractérisé en ce que** le noeud de réseau (20) est un noeud de réseau transmetteur.
